# EUROPEAN PATENT SPECIFICATION

(11) **EP 2 320 585 B1**
(45) Date of publication and mention of the grant of the patent: **27.02.2019**
(21) Application number: 09807890.0
(22) Date of filing: 20.08.2009
(51) Int. Cl.: H04J 3/00, H04J 3/06

(54) **METHOD AND APPARATUS FOR IMPROVING THE EFFECT OF THE SYNCHRONOUS DIGITAL HIERARCHY VIRTUAL CONCATENATION DELAY COMPENSATION BUFFER**
VERFAHREN UND VORRICHTUNG ZUR VERBESSERUNG DER WIRKUNG EINES VIRTUELLEN KONKATENATIONSVERZÖGERUNGKOMPENSATIONSPUFFERS MIT SYNCHRONER DIGITALER HIRARCHIE
PROCÉDÉ ET APPAREIL DESTINÉ À AMÉLIORER L'EFFET DU TAMPON DE COMPENSATION DE RETARD DE CONCATÉNATION VIRTUELLE DE LA HIÉRARCHIE NUMÉRIQUE SYNCHRONE

(30) Priority: 20.08.2008 CN 200810118624
(43) Date of publication of application: 11.05.2011
(73) Proprietor: ZTE Corporation, Shenzhen, Guangdong 518057 (CN)
(72) Inventor: FENG, Jingbin, Shenzhen Guangdong 518057 (CN)
(74) Representative: Davies, Gregory Mark
(86) International application number: PCT/CN2009/073387
(87) International publication number: WO 2010/020191

(56) References cited:
- WO-A2-2007/024729
- CN-A- 1 713 602
- CN-A- 1 725 181
- CN-A- 1 929 476
- US-B1- 6 615 326
- US-B1- 6 721 229
- MATHEW B K ET AL: "Design of a parallel vector access unit for SDRAM memory systems", HIGH-PERFORMANCE COMPUTER ARCHITECTURE, 2000. HPCA-6. PROCEEDINGS. SIX TH INTERNATIONAL SYMPOSIUM ON TOULUSE, FRANCE 8-12 JAN. 2000, LOS ALAMITOS, CA, USA,IEEE COMPUT. SOC, US, 8 January 2000 (2000-01-08), pages 39-48, XP010371890, ISBN: 978-0-7695-0550-3

## Description

### Technical Field

The present invention relates to the field of communication technology, and more especially, to a method and apparatus for improving the efficiency of the synchronous digital hierarchy (SDH) virtual concatenation group (VCG) delay compensation buffer.

### Background of the Related Art

As the main device in the present transport network, SDH device has been widely used in the field of communication, and the standard VC12 (low order virtual container), VC3 (high order virtual container) and VC4 (high order virtual container) can be used respectively to bear time division multiplex (TDM) services such as E1, E3/T3, and E4 which have fixed bandwidths, therefore, there is no high requirement of the virtual container (VC) concatenation, however, with the rapid development of data service, the SDH device should bear data service.

One feature of the data service is the bandwidth uncertainty, and since the data service is a packet service, the bandwidth of the practical service has no necessary association with the interface that the practical service uses, and only very limited kinds of SDH VCs are available, using an individual VC to transmit data services with different bandwidths will bring the bandwidth waste or constraint, and it is hard to use. This problem can be solved by binding several VC members into a VCG. In the practical implementation, flexible VCG bandwidths are provided to transmit the data service, which is called VC concatenation. The VC concatenation comprises the continuous concatenation and the virtual concatenation (VCAT), wherein the VCAT has been widely used since the SDH apparatus on the transport path has no special requirements.

In the VCAT, all VC members in the VCG start from the same transmission source, and each VC member is transported in the SDH network as an individual transport unit and arrives at the same receiving destination. Before arriving at the destination, each VC member might pass different paths, that is, the delay of each member in the transport path is different. Therefore, at the receiving destination, it needs to align all VC members in the VCG and recover the data of the sender with byte interpolation. In this process, each VC member is buffered with a First In First Out (FIFO) buffer, and all VC members are read out at the same time after the last VC member arrives, and this process is called the VCG delay compensation.

According to the feature of the SDH byte interpolation, synchronous static random access memory (SSRAM) is usually applied in the present chip design to buffer VC members for delay compensation. However, since the SSRAM has relatively high cost and relatively small volume, it cannot meet the delay compensation requirement of the Ethernet Over SDH (EOS) apparatus with large volume.

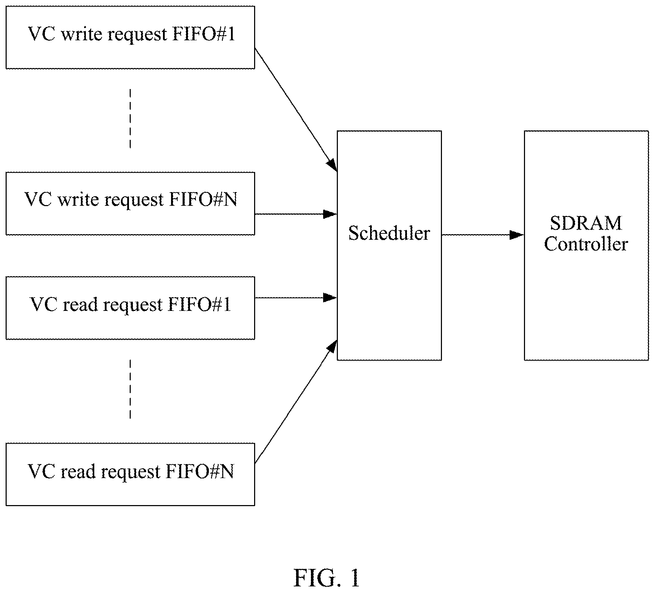

An alternative is to apply the synchronous dynamic random access memory (SDRAM) such as the double date rate (DDR) SDRAM as delay compensation buffer. The structure of the apparatus which applies the SDRAM as delay compensation buffer is shown in FIG. 1, and the scheduler sequentially polls all the VC write or read request FIFO registers and puts the requests to the operation request FIFO register shared by the SDRAM, and the SDRAM controller reads out the requests in the FIFO register and performs the corresponding read and write operations.

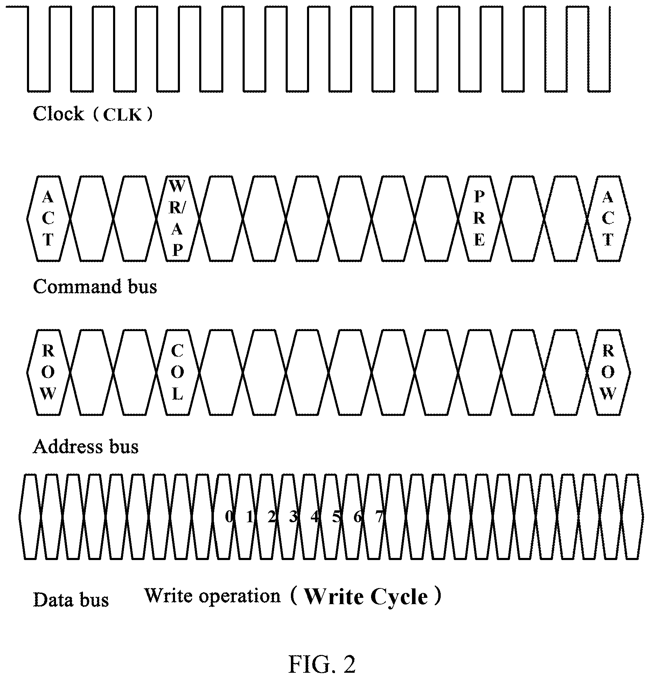

FIG. 2 is the time sequence diagram for one time write operation of SDRAM, and in order to avoid the possible Bank or Row conflict happened in two continuous operations, a whole write operation includes row activation, row activation wait, write command, write command wait, data operation, and row close etc., whose overhead is very big, and the overhead of the read operation is basically the same as that of the write operation. FIG. 2 shows that one time burst write operation sequentially outputs the row activation command (ACT), the write command (WR) and the pre-charging command (PRE) on the command bus, and in a whole write operation whose burst length is 8, only 4 in 13 clock periods are actually used to process the data, and the efficiency of delay compensation buffer is 4/13 × 100%=30.8%. That is, since the time sequence of the SDRAM operation is complicated and the operation takes long time, the efficiency of compensation buffer is relatively low.

The document US 6721229 B1 discloses an apparatus and method for transmitting data using synchronous dynamic random access memory (SDRAM). In example, the method includes writes data using a first set of SDRAM banks. Data is written using a second set of SDRAM banks, wherein the first set of SDRAM banks and the second set of SDRAM banks write interleaved, Data is read using a third set of SDRAM banks. Data is read using a fourth set of SDRAM banks, wherein the fourth set of SDRAM banks and the third set of SDRAM banks read interleaved.

The document US 6615326 B1 discloses methods and structure in a memory controller for sequencing memory device page activation commands to improve memory bandwidth utilization. In a synchronous memory device such as SDRAM or DDR SDRAM, an "activate" command precedes a corresponding "read" or "write" command to ensure that the page or row to be accessed by the "read" or "write" is available ("open") for access. Latency periods between the activation of the page and the readiness of the page for the corresponding read or write command are heretofore filled withnop commands. The present invention looks ahead for subsequent read and write commands and inserts activation commands (hidden activates) in nop command periods of the SDRAM device to prepare a page in another bank for a read or write operation to follow. This sequencing of activate commands overlaps the required latency with current read or write burst operations.

### Content of the Invention

In order to solve the above-mentioned problem, a method and apparatus according to independent claims are provided. Further improvements and embodiments are provided in the dependent claims.

Also provided is a method for improving the efficiency of the SDH virtual concatenation delay compensation buffer, and the method comprises:
mapping virtual containers (VCs) to Banks of a synchronous dynamic random access memory (SDRAM);
writing SDRAM write requests of the VCs into write request first in first out (FIFO) registers of corresponding VCs; writing SDRAM read requests of the VCs into VC read request FIFO registers of corresponding VCs;
polling the write request FIFO registers and the read request FIFO registers of the VCs.

Furthermore, the number of the VCs is 4N+4; the number of the Banks is 4M+4, where N and M are integer and N≥M.

Furthermore, the step of mapping VCs to Banks of a SDRAM comprises:
sequentially aligning the VCs as a first VC, a second VC, ... , a (4N+4)^{th} VC, and sequentially aligning the Banks of the SDRAM as a first Bank, a second Bank, ... , a (4M+4)^{th} Bank;
respectively storing the first (4M+4) VCs in the first Bank, the second Bank, ... , the (4M+4)^{th} Bank of the SDRAM; respectively storing the second (4M+4) VCs subsequent to the first (4M+4) VCs in the first Bank, the second Bank, ... , the (4M+4)^{th} Bank of the SDRAM;...; respectively storing the last (4M+4) VCs in the first Bank, the second Bank, ... , the (4M+4)^{th} Bank of the SDRAM.

Furthermore, the step of writing SDRAM write requests of the VCs to write request FIFO registers of corresponding VCs comprises:
sequentially aligning the VCs as a first VC, a second VC, ... , a (4N+4)^{th} VC, and sequentially aligning the Banks of the SDRAM as a first Bank, a second Bank, ... , a (4M+4)^{th} Bank;
writing the SDRAM write requests of the first VC, the (4M+4+1)^{th} VC, ... , the (4N-4M+1)^{th} VC into the write request FIFO register of the first VC; writing the SDRAM write requests of the second VC, the (4M+4+2)^{th} VC, ... , the (4N-4M+2)^{th} VC into the write request FIFO register of the second VC; writing the SDRAM write requests of the third VC, the (4M+4+3)^{th} VC, ... , the (4N-4M+3)^{th} VC into the write request FIFO register of the third VC; ...; writing the SDRAM write requests of the (4M+4)^{th} VC, the (2(4M+4))^{th} VC, ... , the (4N+4)^{th} VC into the write request FIFO register of the (4M+4)^{th} VC;
the step of writing the SDRAM read requests of the VCs into the read request FIFO registers of the corresponding VC comprises:
   writing the SDRAM read requests of the first VC, the (4M+4+1)^{th} VC, ... , the (4N-4M+1)^{th} VC into the read request FIFO register of the first VC; writing the SDRAM read requests of the second VC, the (4M+4+2)^{th} VC, ... , the (4N-4M+2)^{th} VC into the read request FIFO register of the second VC; writing the SDRAM read requests of the third VC, the (4M+4+3)^{th} VC, ... , the (4N-4M+3)^{th} VC into the read request FIFO register of the third VC; ...; writing the SDRAM read requests of the (4M+4)^{th} VC, the (2(4M+4))^{th} VC, ... , the (4N+4)^{th} VC into the read request FIFO register of the (4M+4)^{th} VC.

The present invention further a method for improving efficiency of synchronous digital hierarchy virtual concatenation delay compensation buffer, the method comprises:
mapping virtual containers (VCs) to Banks of a synchronous dynamic random access memory (SDRAM) respectively;
writing SDRAM write requests into write request first in first out (FIFO) registers of VCs; writing SDRAM read requests into VC read request FIFO registers of VCs;
polling the write request FIFO registers and the read request FIFO registers of the VCs.

Preferably, the VCs are virtual container VC4s in a synchronous transmission module level 4 (STM-4).

Preferably, the VC4 comprise a standard container C4 or three virtual container VC3s; when the VC4 comprises three VC3s, the method further comprises:
buffer of each the VC4 being subdivided into three first child buffers, and each the first child buffer storing one theVC3.

Preferably, the VC3 comprises a standard container C3 or 21 virtual container VC12s; when the virtual container VC3 comprises 21 VC12s, the method further comprises:
dividing buffer of the VC3 into 21 second child buffers, and each the second child buffer storing one VC12.

Preferably, the SDRAM is a single data rate (SDR) SDRAM or a double data rate (DDR) SDRAM.

Also provided is an apparatus for improving efficiency of synchronous digital hierarchy virtual concatenation delay compensation buffer, the apparatus comprises:
a mapping module, which is configured to map virtual containers (VCs) to Banks of a synchronous dynamic random access memory (SDRAM);
a writing-in module, which is configured to write SDRAM write requests of the VCs into write request first in first out (FIFO) registers of corresponding VCs; write SDRAM read requests of the VCs into read request FIFO registers of corresponding VCs;
a polling module, which is configured to poll the write request FIFO registers and read request FIFO registers of the VCs.

Furthermore, the number of the VCs is 4N+4; the number of the Banks is 4M+4, where N and M are integers and N≥M.

Furthermore, the mapping module sequentially aligns the VCs as a first VC, a second VC, ... , a (4N+4)^{th} VC, and sequentially aligns the Banks of the SDRAM as a first Bank, a second Bank, ... , a (4M+4)^{th} Bank;
correspondingly storing the first (4M+4) VCs in the first Bank, the second Bank, ..., the (4M+4)^{th} Bank of the SDRAM; correspondingly storing the second (4M+4) VCs in the first Bank, the second Bank, ... , the (4M+4)^{th} Bank of the SDRAM; ...; correspondingly storing the last (4M+4) VCs in the first Bank, the second Bank, ..., the (4M+4)^{th} Bank of the SDRAM.

Furthermore,
the writing-in module is configured to sequentially align the VCs as a first VC, a second VC, ..., a (4N+4)^{th} VC, and sequentially align the Banks of the SDRAM as a first Bank, a second Bank, ..., a (4M+4)^{th} Bank;
the writing-in module is further configured to write the SDRAM write requests of the first VC, the (4M+4+1)^{th} VC, ..., the (4N-4M+1)^{th} VC into the write request FIFO register of the first VC; writing the SDRAM write requests of the second VC, the (4M+4+2)^{th} VC, ..., the (4N-4M+2)^{th} VC into the write request FIFO register of the second VC; writing the SDRAM write requests of the third VC, the (4M+4+3)^{th} VC, ... , the (4N-4M+3)^{th} VC into the write request FIFO register of the third VC; ...; writing the SDRAM write requests of the (4M+4)^{th} VC, the (2(4M+4))^{th} VC, ..., the (4N+4)^{th} VC into the write request FIFO register of the (4M+4)^{th} VC;
the write-in module is further configured to write the SDRAM read request of the first VC, the (4M+4+1)^{th} VC, ...... , the (4N-4M+1)^{th} VC into the read request FIFO register of the first VC; writing the SDRAM read requests of the second VC, the (4M+4+2)^{th} VC, ...... , the (4N-4M+2)^{th} VC into the read request FIFO register of the second VC; writing the SDRAM read request of the third VC, the (4M+4+3)^{th} VC, ...... , the (4N-4M+3)^{th} VC into the read request FIFO register of the third VC; ...... ; writing the SDRAM read request of the (4M+4)^{th} VC, the (2(4M+4))^{th} VC, ...... , the (4N+4)^{th} VC into the read request FIFO register of the (4M+4)^{th} VC.

The present invention further provides an apparatus for improving efficiency of synchronous digital hierarchy virtual concatenation delay compensation buffer, the apparatus comprises:
a mapping module, which is configured to map virtual containers (VCs) to Banks of a synchronous dynamic random access memory (SDRAM);
a writing-in module, which is configured to write SDRAM write requests of the VCs into write request first in first out (FIFO) registers of corresponding VCs; write SDRAM read requests of the VCs into read request FIFO registers of corresponding VCs;
a polling module, which is configured to poll the write request FIFO registers and read request FIFO registers of the VCs.

Preferably, the VCs are virtual container VC4s in a synchronous transmission module level 4 (STM-4).

Preferably, the VC4 comprises a standard container C4 and three virtual container VC3s; when the VC4 comprises three VC3s, the method further comprises:
a first division module, which is configured to divide buffer of each the VC4 into three first child buffers, and each first child buffer storing one VC3.

Preferably, the VC3 comprises a standard container C3 or 21 virtual container VC12s; the apparatus further comprises:
a second division module, which is configured to divide buffer of the VC3 into 21 second child buffers, and each second child buffer storing one VC12.

Preferably, the SDRAM is a single data rate (SDR) SDRAM or a double data rate (DDR) SDRAM.

One of the above technical schemes has the following beneficial effects: using the feature of VC multiplex and the feature that different Banks of the SDRAM work in parallel, the invalid overhead of the SDRAM operation can be reduced, thus the efficiency of the SDH virtual concatenation delay compensation buffer is improved.

### Brief Description of Drawings

FIG. 1 is a structure diagram of the apparatus using SDRAM to implement VCAT delay compensation in the prior art;
FIG. 2 illustrates the time sequence of a complete one time write operation in the prior art;
FIG. 3 is a flow chart of the method for improving the efficiency of the SDH virtual concatenation delay compensation buffer in accordance with the present invention;
FIG. 4 illustrates the mapping relationship of VC and the Bank of the SDRAM in accordance with the present invention;
FIG. 5 is a time sequence of four Banks operating in parallel in accordance with the present invention;
FIG. 6 is a diagram of the apparatus for improving the efficiency of the SDH virtual concatenation delay compensation buffer.

### Preferred Embodiments of the Present Invention

To make the object, technical scheme and advantages of the present invention clearer and more understandable, the embodiment of the present invention will be illustrated in further detail with combination of the accompanying figures. Herein, the exemplary embodiment of the present invention and its description are used to explain the present invention rather than limit the present invention.

The present invention provides a method in which, by aligning the multipath transmitted VC members at the receiving port of the VCG in the SDH device, delay compensation buffer is implemented, in the method, a corresponding relationship between the VC multiplex path and the Bank of the SDRAM is established, the write and read operation request of each VC is polled according to the VC multiplex relationship and scheduled for processing by the SDRAM controller, and then parallel operation of different Bank areas of SDRAM can be utilized to reduce the invalid overhead of the SDRAM operation so as to improve the efficiency of the SDH virtual concatenation delay compensation buffer.

Wherein, the VC multiplex path is N VC4s interpolating and multiplexing into the STM-N (wherein N=1, 4, 16, 64 and 256) frame structure, and each VC4 can be formed by interpolating and multiplexing one C4 or three VC3s, and each VC3 can be formed by interpolating and multiplexing one C3 or 21 VC12s.

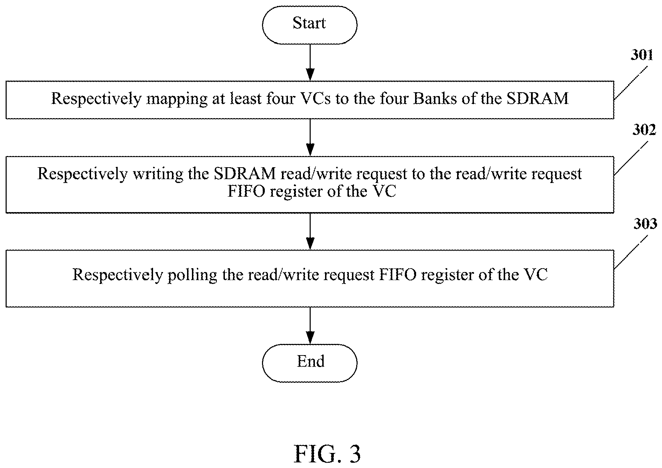

FIG. 3 is a flow chart of the method for improving the efficiency of the SDH virtual concatenation delay compensation buffer, and the method comprises the following steps:
Step 301, respectively mapping at least four VCs to the four Banks of the SDRAM;
Herein, the number of VCs is generally 4N+4, where N is an integer. The number of the Banks of the SDRAM might generally be 4M+4 rather than 4, where M is an integer. Generally, there is N≥M. To simplify the illustration, the number of the Banks of the SDRAM is set as 4, and since the processing procedure in the case that the number of SDRAM Banks is 4M+4 is the same as that in the case that the number of Banks is 4, the case that the number of the Banks of the SDRAM is 4M+4 will not be described to avoid repetition herein.

The number of VCs might not be an integer multiple of 4, and if the number of VCs is smaller than 4, the VCs might be mapped to the four SDRAM Banks, and at this time, some SDRAMs are idle. When the number of VCs is larger than 4 and is not an integer multiple of 4, the operation is the same as that when the amount is an integer multiple of 4 closest to the number of the VCs, while the rest VCs are not used.

For understanding easily, just take the above-mentioned VC being the high order VC4 for example to illustrate the present invention in the following, but the present invention is not limited to this case. If there are four VC4s set in this step, the four VC4s are denoted as VC4#1, VC4#2, VC4#3 and VC4#4, and the number of VC4s can be selected according to the practical condition, for example, the number of VC4s might be set as 4N+4 (N is a natural number), and the VC4s are denoted as VC4#1, VC4#2, VC4#3 ...... VC4#(4N+4), wherein, the VC4#(4N+4) denotes the (4N+4)^{th} VC4.

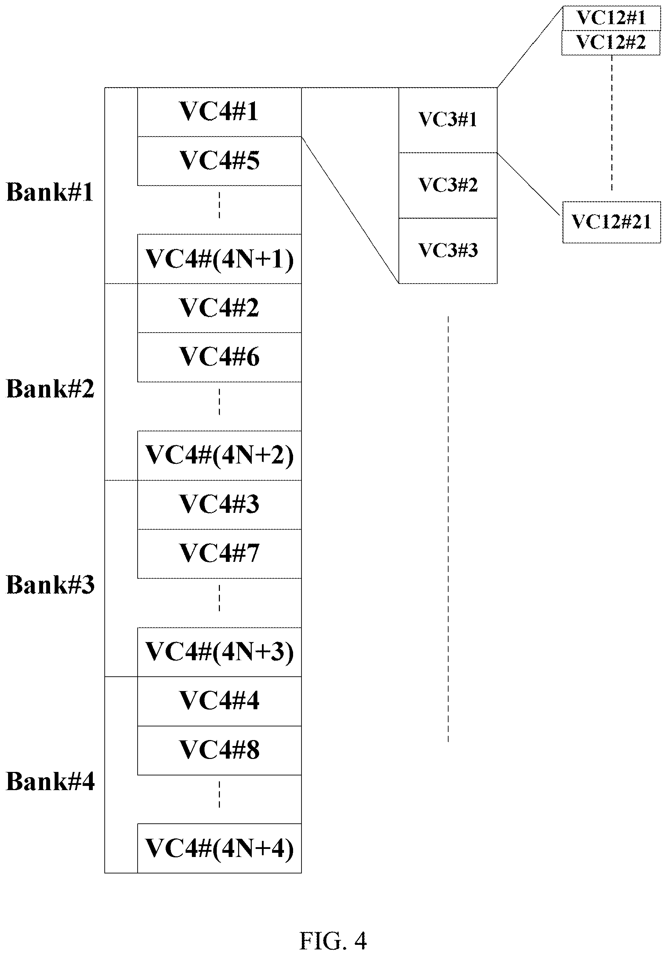

Herein, address mapping might be used to establish the corresponding relationship between at least four VC4s and four Banks of the SDRAM, for example, VC4#1 is stored in Bank#1, VC4#2 is stored in Bank#2, VC4#3 is stored in Bank#3, and VC4#4 is stored in Bank#4. When the number of VC4s is set as 4N+4 (N is an integer), VC4#1, VC4#5 ...... VC4#(4N+1) are stored in Bank#1, VC4#2, VC4#6 ...... VC4#(4N+2) are stored in Bank#2, VC4#3, VC4#7 ...... VC4#(4N+3) are stored in Bank#3, and VC4#4, VC4#8 ...... VC4#(4N+4) are stored in Bank#4, refer to FIG. 4, where N is a natural number.

In this step, the feature of VC multiplex such as the several VC4s interpolation and multiplex in the SDH STM-N frame structure can be used, wherein, three VC3s can be interpolated and multiplexed in each VC4 and 21 VC12s can be interpolated and multiplexed in each VC3, so as to make 63 VC12s multiplexed into a VC4. That is, each VC4 comprises one C4 or three VC3s, and each VC3 might comprise 1 C3 or 21 VC12s.

Herein, each VC4 buffer is subdivided into three child buffers, and each child buffer stores one VC3, alternatively, the VC3 buffer can be subdivided into 21 child buffers, and each child buffer stores one VC12. As shown in FIG. 4, the buffer of VC4#1 is subdivided into three child buffers, and the first VC4 child buffer stores VC3#1, the second VC4 child buffer stores VC3#2, and the third VC4 child buffer stores VC3#3, moreover, the buffer of VC3#1 is subdivided into 21 child buffers, and the first VC3 child buffer stores VC12#1, ...... , the twenty-first VC3 child buffer stores VC12#21, the configurations of VC3#2 and VC3#3 are the same as that of VC3#1, thus they are not described to avoid repetition here, and the configuration of other VC4#(4N+4) is similar to the configuration of VC4#1.

Wherein, the SDRAM can be a Single Data Rate (SDR) SDRAM or a Double Data Rate (DDR) SDRAM, although it is not limited to them.

Step 302, writing the SDRAM read/write request to the read/write request FIFO register of the VC respectively;

That is, the SDRAM write and read requests of each VC are respectively written into their corresponding request FIFO registers, and the request FIFO registers comprise the write request FIFO registers and the read request FIFO registers. The above-mentioned "corresponding" can be understood as, the SDRAM write request of VC4#1 is written into the write request FIFO register of VC4#1, the SDRAM write request of VC4#2 is written into the write request FIFO register of VC4#2, the SDRAM write request of VC4#3 is written into the write request FIFO register of VC4#3, and the SDRAM write request of VC4#4 is written into the write request FIFO register of VC4#4. Likewise, the SDRAM read request of VC4#1 is written into the read request FIFO register in VC4#1, the SDRAM read request of VC4#2 is written into the read request FIFO register in VC4#2, the SDRAM read request of VC4#3 is written into the read request FIFO register in VC4#3, and the SDRAM read request of VC4#4 is written into the read request FIFO register in VC4#4. In the case that the number of VC4 members is 4N+4, the SDRAM write request of VC4#1 is written into the write request FIFO register in VC4#1, the SDRAM write request of VC4#2 is written into the write request FIFO register in VC4#2, the SDRAM write request of VC4#3 is written into the write request FIFO register in VC4#3, and the SDRAM write request of VC4#4 is written into the write request FIFO register in VC4#4. the SDRAM write request of VC4#5 is written into the write request FIFO register in VC4#1, the SDRAM write request of VC4#6 is written into the write request FIFO register in VC4#2, ...... , the SDRAM write request of VC4#(4N+3) is written into the write request FIFO register in VC4#3, and the SDRAM write request of VC4#(4N+4) is written into the write request FIFO register in VC4#4.

Step 303, respectively polling the read/write request FIFO register of the VC.

Herein, polling the write request FIFO register and then the read request FIFO register; or vice versa.

Herein, for example, polling the write request FIFO register of VC4#1 and then that of VC4#2, and if there are three VC3 in VC4#1, sequentially polling the write request FIFO registers of VC3#1, VC3#2 and VC3#3, and after polling the write request registers of all VC3s in VC4#1, polling the write request FIFO registers of VC4#2, and if there are 21 VC12s configured in VC3#1 in VC4#1, polling the write request FIFO registers of VC4#2 after polling the write request FIFO registers of all VC12s, and the processing method in VC4#2 is the same as that in VC4#1 and will not be described here.

And then, polling the read request FIFO registers of VC4#1 and then those of VC4#2, and if there are three VC3 in VC4#1, sequentially polling the read request FIFO registers of VC3#1, VC3#2 and VC3#3, and after polling the read request registers of all VC3s in VC4#1, polling the read request FIFO registers of VC4#2, and if there are 21 VC12s configured in the VC3#1 in VC4#1, polling the read request FIFO registers of VC4#2 after polling the read request FIFO register of all VC12s, and the processing method in VC4#2 is the same as that in VC4#1 and will not be described to avoid repetition here.

The efficiency of the existing SDRAM operation is low due to the increased row switching overhead because of the row address conflict in two continuous operations. Since the SDRAM generally has four Banks and the four Banks can work in parallel, the switching between two different Banks only needs very little overhead time. Therefore, the invalid overhead is saved with the feature of different Banks of the SDRAM working in parallel.

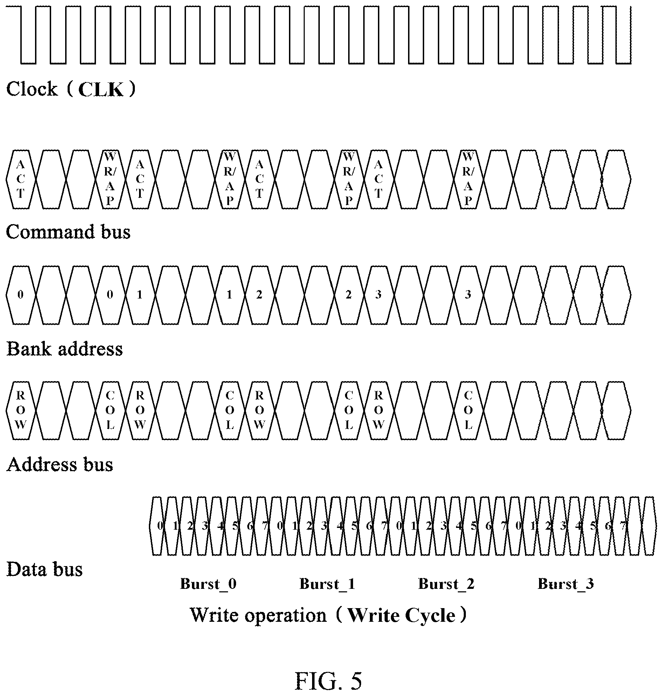

Refer to FIG. 5, in which Burst denotes the burst data, ACT denotes a DDR operation command of Active; WR/AP denotes a DDR operation command of Write With Auto Precharge; RR/AP denotes a DDR operation command of Read With Auto Precharge; ROW denotes the row address of the DDR, COL denotes the column address of the DDR, and FIG. 5 illustrates the method of using the fixed time sequence of four Bank working in parallel to implement the SDH virtual concatenation delay compensation buffer. From FIG. 5, it can be seen that there exists four complete write operations with burst length of 8, and 16 in 22 clock cycles have write operations, that is, the efficiency of write operations in the SDRAM controller is 16/22*100%=72.7%, compared with the prior art, the efficiency of delay compensation buffer is significantly improved.

From the above-mentioned technical scheme, with the feature of VC multiplex and different SDRAM Banks working in parallel, the invalid overhead in the SDRAM operation can be reduced and the efficiency of the SDH virtual concatenation delay compensation buffer can be improved.

The method for processing the virtual concatenation delay compensation in the present invention will be described in the following by taking four VC4s of STM-4 for example, and the method comprises the following steps:
Step 1, store the first VC4, the second VC4, the third VC4, and the fourth VC4 to the 1 to 4 Banks of the DDR SDRAM respectively;
Step 2, write the SDRAM write requests of four VC4s into the four VC4 write request FIFO registers, and write the SDRAM read requests of four VC4s into the four VC4 read request FIFO registers;
Step 3, the scheduler polls the write request FIFO registers of the first VC4, the second VC4, the third VC4 and the fourth VC4 respectively in turn, and schedules the write-in data of the four VC4s to the SDRAM controller for further processing; and then polls the read operations of the first VC4, the second VC4, the third VC4, and the fourth VC4 in turn, and then schedules the read-out data of the four VC4s to the SDRAM controller for further processing, and so on.

Since the four VC4s are located in four different Banks of the SDRAM, they can work in parallel in great degree, thus the SDRAM write and read operations of the VC can be implemented with very little overhead and the efficiency of the SDH virtual concatenation delay compensation buffer is significantly improved.

In order to achieve the above-mentioned method, the present invention also provides an apparatus for improving the efficiency of the SDH virtual concatenation delay compensation buffer. It should be noted at first that, this apparatus is configured to implement each step of the above-mentioned method, the present invention, however, is not confined to the apparatus, and any apparatus which can achieve the above-mentioned method should be in the protection scope of the present invention. Moreover, in the following description, the content which is the same as the above-mentioned method has been omitted to save the pages.

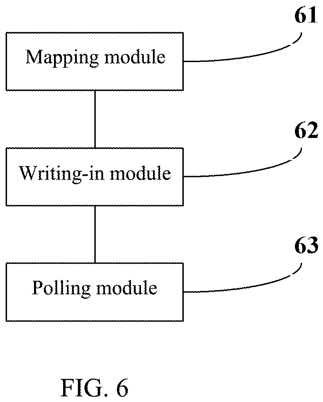

FIG. 6 is a structural diagram of the apparatus for improving the efficiency of the SDH virtual concatenation delay compensation buffer, and the apparatus comprises:
The mapping module 61, which is configured to respectively map at least four VCs to the four Banks of the SDRAM;
The writing-in module 62, which is configured to respectively write the SDRAM write requests to the write request FIFO registers of the VCs; write the SDRAM read requests to the read request FIFO registers of the VCs respectively; and
The polling module 63, which is configured to poll the write request FIFO registers of said VCs and the read request FIFO registers of said VCs.

In the present invention, the VC can be VC4 in STM-4, and the VC4 comprises one C4 or three VC3, and when the VC4 comprises three VC3, the apparatus also comprises:
A first division module, which is configured to divide each VC4 buffer into three first child buffers and each first child buffer stores one VC3.

Wherein, a VC3 might comprise one C3 or 21 VC12s, and the apparatus also comprises:
A second division module, which is configured to divide the VC3 buffer into at least 21 second child buffers, and each second child buffer stores one VC12.

From the above technical scheme, it can be seen that with the feature of VC multiplex and different SDRAM Banks working in parallel, the invalid overhead in the SDRAM operation can be reduced, so that the efficiency of the SDH virtual concatenation delay compensation buffer can be improved.

The above description is only the preferred embodiments of the present invention.

### Industrial Applicability

With the feature of VC multiplex and different Banks of the SDRAM working in parallel, the present invention reduces the invalid overhead of the SDRAM operation so that the efficiency of the SDH virtual concatenation delay compensation buffer can be improved; therefore it has very high industrial applicability.

## Claims

1. A method for aligning multipath transmitted VC, virtual container, members at a receiving port of a VCG, Virtual Concatenation Group, in SDH, Synchronous Digital Hierarchy, device, the method comprising:
mapping VCs to Banks of a synchronous dynamic random access memory, SDRAM, wherein the Banks of the SDRAM work in parallel and the number of the VCs is 4N+4 and the number of the Banks is 4M +4, where N and M are integer and N≥M;
writing (302) SDRAM write requests of said VCs into write request first in first out, FIFO, registers of corresponding VCs and writing (302) SDRAM read requests of said VCs into read request FIFO registers of corresponding VCs;
polling (303) the write request FIFO registers and the read request FIFO registers of said VCs and scheduling data of the VCs to a SDRAM controller for further processing,
wherein, said step of mapping VCs to Banks of a SDRAM further comprises:
sequentially aligning the VCs as a first VC, a second VC, ... , a (4N+4)^{th} VC, and sequentially aligning the Banks of the SDRAM as a first Bank, a second Bank, ... , a (4M+4)^{th} Bank;
respectively storing the first (4M+4) VCs in the first Bank, the second Bank, ... , the (4M+4)^{th} Bank of the SDRAM; respectively storing the second (4M+4) VCs subsequent to the first (4M+4) VCs in the first Bank, the second Bank, ... , the (4M+4)^{th} Bank of the SDRAM; respectively storing the last (4M+4) VCs in the first Bank, the second Bank, ... , the (4M+4)^{th} Bank of the SDRAM,
wherein, the step of writing SDRAM write requests of said VCs into write request FIFO registers of corresponding VCs further comprises:
sequentially aligning the VCs as a first VC, a second VC, ... , a (4N+4)^{th} VC, and sequentially aligning the Banks of the SDRAM as a first Bank, a second Bank, ... , a (4M+4)^{th} Bank;
writing the SDRAM write requests of the first VC, the (4M+4+1)^{th} VC, ... , the (4N-4M+1)^{th} VC into the write request FIFO register of the first VC; writing the SDRAM write requests of the second VC, the (4M+4+2)^{th} VC, ... , the (4N-4M+2)^{th} VC into the write request FIFO register of the second VC; writing the SDRAM write requests of the third VC, the (4M+4+3)^{th} VC, ... , the (4N-4M+3)^{th} VC into the write request FIFO register of the third VC; writing the SDRAM write requests of the (4M+4)^{th} VC, the (2(4M+4))^{th} VC, ... , the (4N+4)^{th} VC into the write request FIFO register of the (4M+4)^{th} VC;
said step of writing the SDRAM read requests of said VCs into the read request FIFO registers of corresponding VCs further comprises:
writing the SDRAM read requests of the first VC, the (4M+4+1)^{th} VC, ... , the (4N-4M+1)^{th} VC into the read request FIFO register of the first VC; writing the SDRAM read requests of the second VC, the (4M+4+2)^{th} VC, ... , the (4N-4M+2)^{th} VC into the read request FIFO register of the second VC; writing the SDRAM read requests of the third VC, the (4M+4+3)^{th} VC, ... , the (4N-4M+3)^{th} VC into the read request FIFO register of the third VC; writing the SDRAM read requests of the (4M+4)^{th} VC, the (2(4M+4))^{th} VC, ... , the (4N+4)^{th} VC into the read request FIFO register of the (4M+4)^{th} VC.

2. A method of claim 1, wherein, said VCs are virtual container VC4s in a synchronous transmission module level 4, STM-4.

3. A method of claim 2, wherein, said VC4 comprise a standard container C4 or three virtual container VC3s;
when the VC4 comprises three VC3s, after the step of mapping VCs to Banks of a SDRAM, the method further comprises:
buffering each of said VC4 being subdivided into three first child buffers, and each of said first child buffer storing one saidVC3.

4. A method of claim 3, wherein, said VC3 comprises a standard container C3 or 21 virtual container VC12s;
when said virtual container VC3 comprises 21 VC12s, after the step of buffer of each of said VC4 being subdivided into three first child buffers, and each of said first child buffer storing one said VC3, the method further comprises:
dividing buffer of said VC3 into 21 second child buffers, and each of said second child buffer storing one VC12.

5. A method of claim 1, wherein, said SDRAM is a single data rate, SDR, SDRAM or a double data rate, DDR, SDRAM.

6. An apparatus for aligning multipath transmitted VC, virtual container, members at a port of a VCG, Virtual Concatenation Group, in a SDH, Synchronous Digital Hierarchy, device, the apparatus comprising:
a mapping module (61), which is configured to map VCs to Banks of a synchronous dynamic random access memory, SDRAM, wherein the Banks of the SDRAM work in parallel and the number of the VCs is 4N+4 and the number of the Banks is 4M+4, where N and M are integer and N≥M;
a writing-in module (62), which is configured to write SDRAM write requests of said VCs into write request first in first out, FIFO, registers of corresponding VCs and write SDRAM read requests of said VCs into read request FIFO registers of corresponding VCs;
a polling module (63), which is configured to poll the write request FIFO registers and read request FIFO registers of said VCs and schedule data of the VCs to a SDRAM controller for further processing,
wherein, said mapping module is further configured to sequentially align the VCs as a first VC, a second VC, ... , a (4N+4)^{th} VC, and sequentially align the Banks of the SDRAM as a first Bank, a second Bank, ... , a (4M+4)^{th} Bank;
the SDRAM is configured to store the first (4M+4) VCs in the first Bank, the second Bank, ..., the (4M+4)^{th} Bank of the SDRAM and correspondingly store the second (4M+4) VCs in the first Bank, the second Bank, ... , the (4M+4)^{th} Bank of the SDRAM; correspondingly storing the last (4M+4) VCs in the first Bank, the second Bank, ..., the (4M+4)^{th} Bank of the SDRAM,
wherein, said writing-in module is further configured to sequentially align the VCs as a first VC, a second VC, ..., a (4N+4)^{th} VC, and sequentially align the Banks of the SDRAM as a first Bank, a second Bank, ..., a (4M+4)^{th} Bank;
said writing-in module is further configured to write the SDRAM write requests of the first VC, the (4M+4+1)^{th} VC, ..., the (4N-4M+1)^{th} VC into the write request FIFO register of the first VC, write the SDRAM write requests of the second VC, the (4M+4+2)^{th} VC, ..., the (4N-4M+2)^{th} VC into the write request FIFO register of the second VC, write the SDRAM write requests of the third VC, the (4M+4+3)^{th} VC, ... , the (4N-4M+3)^{th} VC into the write request FIFO register of the third VC, and write the SDRAM write requests of the (4M+4)^{th} VC, the (2(4M+4))^{th} VC, ..., the (4N+4)^{th} VC into the write request FIFO register of the (4M+4)^{th} VC;
said write-in module is further configured to write the SDRAM read request of the first VC, the (4M+4+1)^{th} VC, ...... , the (4N-4M+1)^{th} VC into the read request FIFO register of the first VC, write the SDRAM read requests of the second VC, the (4M+4+2)^{th} VC, ...... , the (4N-4M+2)^{th} VC into the read request FIFO register of the second VC, write the SDRAM read request of the third VC, the (4M+4+3)^{th} VC, ...... , the (4N-4M+3)^{th} VC into the read request FIFO register of the third VC; ...... , and write the SDRAM read request of the (4M+4)^{th} VC, the (2(4M+4))^{th} VC, ...... , the (4N+4)^{th} VC into the read request FIFO register of the (4M+4)^{th} VC.

7. An apparatus of claim 6, wherein, said VCs are virtual container VC4s in a synchronous transmission module level 4, STM-4.

8. An apparatus of claim 7, wherein, said VC4 comprises a standard container C4 and three virtual container VC3s;
when the VC4 comprises three VC3s, the apparatus further comprises:
a first division module, which is configured to divide buffer of each said VC4 into three first child buffers, and each of said first child buffer is configured to store one VC3.

9. An apparatus of claim 8, wherein, said VC3 comprises a standard container C3 or 21 virtual container VC12s;
when the VC3 comprises 21 VC12s, the apparatus further comprises:
a second division module, which is configured to divide buffer of said VC3 into 21 second child buffers, and each of said second child buffer is configured to store one VC12.

10. An apparatus of claim 6, wherein, said SDRAM is a single data rate, SDR, SDRAM or a double data rate, DDR, SDRAM.

## Patentansprüche

1. Verfahren zum Ausrichten von Mehrweg-übertragenen VC-, virtuelle Container, Elementen an einem Empfangsport einer VCG, virtueller Konkatenationsgruppe, in einer SDH-, synchronen digitalen Hierarchie, Vorrichtung, das Verfahren umfassend:
Abbilden von VCs auf Banken eines synchronen dynamischen Arbeitsspeichers, SDRAM, wobei die Banken des SDRAM parallel arbeiten und die Anzahl der VCs 4N+4 ist und die Anzahl der Banken 4M+4 ist, wobei N und M eine ganze Zahl sind und N≥M;
Schreiben (302) von SDRAM-Schreibanforderungen der VCs in Schreibanforderungs-, first in first out, FIFO, Register von entsprechenden VCs und Schreiben (302) von SDRAM-Leseanforderungen der VCs in Leseanforderungs- FIFO Register von entsprechenden VCs;
Abfragen (303) der Schreibanforderungs- FIFO Register und der Leseanforderungs-FIFO Register der VCs und Festlegen von Daten der VCs auf einer SDRAM-Steuerung zur weiteren Verarbeitung,
wobei der Schritt des Abbildens von VCs auf Banken eines SDRAMs weiter umfasst:
sequentielles Ausrichten der VCs als einen ersten VC, einen zweiten VC, ... , einen (4N+4)ten VC, und sequentielles Ausrichten der Banken des SDRAMs als eine erste Bank, eine zweite Bank, ... , eine (4M+4)te Bank;
jeweils Speichern der ersten (4M+4) VCs in der ersten Bank, der zweiten Bank, ... , der (4M+4)ten Bank des SDRAMs; jeweils Speichern der zweiten (4M+4) VCs subsequent zu den ersten (4M+4) VCs in der ersten Bank, der zweiten Bank, ... , der (4M+4)ten Bank von dem SDRAM; jeweils Speichern der letzten (4M+4) VCs in der ersten Bank, der zweiten Bank, ... , der (4M+4)ten Bank von dem SDRAM,
wobei der Schritt des Schreibens von SDRAM-Schreibanforderungen der VCs in Schreibanforderungs- FIFO Register von entsprechenden VCs weiter umfasst:
sequentielles Ausrichten der VCs als einen ersten VC, einen zweiten VC, ... , einen (4N+4)ten VC, und sequentielles Ausrichten der Banken des SDRAMs als eine erste Bank, eine zweite Bank, ... , eine (4M+4)te Bank;
Schreiben der SDRAM-Schreibanforderungen des ersten VCs, des (4M+4+1)ten VCs, ... , des (4N-4M+1)ten VCs in das Schreibanforderungs- FIFO Register des ersten VCs; Schreiben der SDRAM-Schreibanforderungen des zweiten VCs, des (4M+4+2)ten VCs, ... , des (4N-4M+2)ten VCs in das Schreibanforderungs- FIFO Register des zweiten VCs; Schreiben der SDRAM-Schreibanforderungen des dritten VCs, des (4M+4+3)ten VCs, ... , des (4N-4M+3)ten VCs in das Schreibanforderungs- FIFO Register des dritten VCs; Schreiben der SDRAM-Schreibanforderungen des (4M+4)ten VCs, des (2(4M+4))ten VCs, ... , des (4N+4)ten VCs in das Schreibanforderungs- FIFO Register des (4M+4)ten VCs;
wobei der Schritt des Schreibens der SDRAM-Leseanforderungen der VCs in die Leseanforderungs- FIFO Register von entsprechenden VCs weiter umfasst:
Schreiben der SDRAM-Leseanforderungen des ersten VCs, des (4M+4+1)ten VCs, ... , des (4N-4M+1)ten VCs in das Leseanforderungs- FIFO Register des ersten VCs; Schreiben der SDRAM-Leseanforderungen des zweiten VCs, des (4M+4+2)ten VCs, ... , des (4N-4M+2)ten VCs in das Leseanforderungs- FIFO Register des zweiten VCs; Schreiben der SDRAM-Leseanforderungen des dritten VCs, des (4M+4+3)ten VCs, ... , des (4N-4M+3)ten VCs in das Leseanforderungs- FIFO Register des dritten VCs; Schreiben der SDRAM-Leseanforderungen des (4M+4)ten VCs, des (2(4M+4))ten VCs, ... , des (4N+4)ten VCs in das Leseanforderungs- FIFO Register des (4M+4)ten VCs.

2. Verfahren nach Anspruch 1, wobei die VCs virtuelle Container VC4s in einer synchronen Übertragungsmodulebene 4, STM-4 sind.

3. Verfahren nach Anspruch 2, wobei die VC4s einen Standardcontainer C4 oder drei virtuelle Container VC3s umfasst;
wenn der VC4 drei VC3s umfasst, nach dem Schritt des Abbildens von VCs auf Banken eines SDRAMs, das Verfahren weiter umfasst:
Puffern von jedem des VC4, der in drei erste Kinderpuffer unterteilt ist, und jedem der ersten Kinderpuffer, die einen des VC3 speichern.

4. Verfahren nach Anspruch 3, wobei der VC3 einen Standardcontainer C3 oder 21 virtuelle Container VC12s umfasst;
wenn der VC3 21 VC12s umfasst, nach dem Schritt des Pufferns von jedem des VC4, der in drei erste Kinderpuffer unterteilt ist, und jedem der ersten Kinderpuffer, die einen des VC3 speichern, das Verfahren weiter umfasst:
Unterteilen von Puffern von dem VC3 in 21 zweite Kinderpuffer, und jeder der zweiten Kinderpuffer einen VC12 speichert.

5. Verfahren nach Anspruch 1, wobei der SDRAM eine einzige Datenrate, SDR, SDRM oder eine doppelte Datenrate, DDR, SDRAM ist.

6. Vorrichtung zum Ausrichten von Mehrweg-übertragenen VC-, virtuelle Container, Elementen an einem Port einer VCG, virtueller Konkatenationsgruppe, in einer SDH-, synchronen digitalen Hierarchie, die Vorrichtung umfassend:
ein Abbildungsmodul (61), das konfiguriert ist, um VCs auf Banken von einem synchronen dynamischen Arbeitsspeicher, SDRAM abzubilden, wobei die Banken des SDRAM parallel arbeiten und die Anzahl der VCs 4N+4 ist und die Anzahl der Banken 4M+4 ist, wobei N und M eine ganze Zahl sind und N≥M;
ein Schreibmodul (62), das konfiguriert ist, um SDRAM-Schreibanforderungen der VCs in Schreibanforderungs-, first in first out, FIFO, Register von entsprechenden VCs zu schreiben und SDRAM-Leseanforderungen der VCs in Leseanforderungs- FIFO Register von entsprechenden VCs zu schreiben;
ein Abfragemodul (63), das konfiguriert ist, um die Schreibanforderungs- FIFO Register und die Leseanforderungs- FIFO Register der VCs abzufragen Daten der VCs auf einer SDRAM-Steuerung zur weiteren Verarbeitung festzulegen,
wobei das Abbildungsmodul weiter konfiguriert ist, um die VCs als einen ersten VC, einen zweiten VC, ... , einen (4N+4)ten VC sequentiell auszurichten, und die Banken des SDRAMs als eine erste Bank, eine zweite Bank, ... , eine (4M+4)te Bank sequentiell auszurichten;
wobei der SDRAM konfiguriert ist, um die ersten (4M+4) VCs in der ersten Bank, der zweiten Bank, ... , der (4M+4)ten Bank des SDRAMs zu speichern und entsprechend die zweiten (4M+4) in der ersten Bank, der zweiten Bank, ... , der (4M+4)ten Bank von dem SDRAM zu speichern; entsprechend die letzten (4M+4) VCs in der ersten Bank, der zweiten Bank, ... , der (4M+4)ten Bank von dem SDRAM zu speichern,
wobei das Schreibmodul weiter konfiguriert ist, um die VCs als einen ersten VC, einen zweiten VC, ... , einen (4N+4)ten VC sequentiell auszurichten, und die Banken des SDRAMs als eine erste Bank, eine zweite Bank, ... , eine (4M+4)te Bank sequentiell auszurichten;
wobei das Schreibmodul weiter konfiguriert ist, um die SDRAM-Schreibanforderungen des ersten VCs, des (4M+4+1)ten VCs, ... , des (4N-4M+1)ten VCs in das Schreibanforderungs- FIFO Register des ersten VCs zu schreiben; die SDRAM-Schreibanforderungen des zweiten VCs, des (4M+4+2)ten VCs, ... , des (4N-4M+2)ten VCs in das Schreibanforderungs- FIFO Register des zweiten VCs zu schreiben; die SDRAM-Schreibanforderungen des dritten VCs, des (4M+4+3)ten VCs, ... , des (4N-4M+3)ten VCs in das Schreibanforderungs- FIFO Register des dritten VCs zu schreiben; und die SDRAM-Schreibanforderungen des (4M+4)ten VCs, des (2(4M+4))ten VCs, ... , des (4N+4)ten VCs in das Schreibanforderungs- FIFO Register des (4M+4)ten VCs zu schreiben;
wobei das Schreibmodul weiter konfiguriert ist, um die SDRAM-Leseanforderungen des ersten VCs, des (4M+4+1)ten VCs, ... , des (4N-4M+1)ten VCs in das Leseanforderungs- FIFO Register des ersten VCs zu schreiben; die SDRAM-Leseanforderungen des zweiten VCs, des (4M+4+2)ten VCs, ... , des (4N-4M+2)ten VCs in das Leseanforderungs- FIFO Register des zweiten VCs zu schreiben; die SDRAM-Leseanforderungen des dritten VCs, des (4M+4+3)ten VCs, ... , des (4N-4M+3)ten VCs in das Leseanforderungs- FIFO Register des dritten VCs zu schreiben; die SDRAM-Leseanforderungen des (4M+4)ten VCs, des (2(4M+4))ten VCs, ... , des (4N+4)ten VCs in das Leseanforderungs- FIFO Register des (4M+4)ten VCs zu schreiben.

7. Vorrichtung nach Anspruch 6, wobei die VCs virtuelle Container VC4s in einer synchronen Übertragungsmodulebene, STM-4 sind.

8. Vorrichtung nach Anspruch 7, wobei der VC4 einen Standardcontainer C4 und drei virtuelle Container VC3s umfasst;
wenn der VC4 drei VC3s umfasst, die Vorrichtung weiter umfasst:
ein erstes Unterteilungsmodul, das konfiguriert ist, um Puffer von jedem des VC4 in drei erste Kinderpuffer zu unterteilen, und jeder der ersten Kinderpuffer konfiguriert ist, um einen VC3 zu speichern.

9. Vorrichtung nach Anspruch 8, wobei der VC3 einen Standardcontainer C3 oder 21 virtuelle Container VC12s umfasst;
wenn der VC3 21 VC12s umfasst, die Vorrichtung weiter umfasst:
ein zweites Unterteilungsmodul, das konfiguriert ist, um Puffer des VC3 in 21 zweite Kinderpuffer zu unterteilen, und jeder der zweiten Kinderpuffer konfiguriert ist, um einen VC12 zu speichern.

10. Vorrichtung nach Anspruch 6, wobei der SDRAM eine einzige Datenrate, SDR, SDRM oder eine doppelte Datenrate, DDR, SDRAM ist.

## Revendications

1. Procédé pour aligner les members de VC, le conteneur virtuel, transmis par trajets multiplessur un port de réception d'un VCG, Groupe de Concaténation Virtuel dans une SDH, Hiérarchie numérique synchrone, dispositif, le procédé comprenant:
mappage des VCs à des Banques d'une Mémoire dynamique synchrone à accès aléatoire, SDRAM+ dans laquelle les Banques de la SDRAM travaillent en parallèle et le nombre de VCsest 4N+4 et le nombre de Banques est 4M+4, où N et M sont des nombres entiers et N≥M;
écrire (302) des demandes d'écriture de SDRAM desdits VCs en demande d'écriture premier entré premier sorti, FIFO, registres des VCs correspondants et écrire (302) des demandes de lecture de SDRAM desdits VCs en des registres de FIFO de demande de lecture des VCs correspondants;
interroger (303) les registres de FIFO de demande d'écriture et les registres de FIFO de demande de Lecture desdits VCs et les données de planification des VCs à un contrôleur SDRAM pour plus de traitement,
dans lequel, ladite étape de mappage de VCs aux Banques d'une SDRAM comprend en outre:
aligner séquentiellement les VCs en tant que un premier VC, un deuxième VC,..., un (4N+4)^{ème} VC, et aligner séquentiellement les Banques de la SDRAM en tant qu'une première Banque, une deuxième Banque,...,une(4M+4)^{ème} Banque;
stocker respectivement les premiers (4M+4) VCs dans la première Banque, la deuxième Banque,..., la (4M+4)^{ème} Banque de la SDRAM; stocker respectivement les deuxièmes (4M+4) VCs après les premiers (4M+4) VCs dans la première Banque, la deuxième Banque,..., la (4M+4)^{ème} Banque de la SDRAM; stocker respectivement les derniers (4M+4) VCs dans la première Banque, la seconde Banque,..., la (4M+4)^{ème} Banque de la SDRAM,
dans lequel, l'étape d'écrire des demandes d'écriture de SDRAM desdits VCs dans les registres de FIFO de demande d'écriture des VCs correspondants comprend en outre:
aligner séquentiellement les VCs en tant qu'un premier VC, un deuxième VC,..., un (4N+4)^{ème} VC, et aligner séquentiellement les Banques de la SDRAM en tant qu'une première Banque, un deuxième Banque,..., un (4M+4)^{ème} Banque;
écrire les demandes d'écriture de SDRAM du premier VC, le (4M+4+1)^{ème} VC,..., le (4N+4M+1)^{ème} VC dans le registre de FIFO de demande d'écriture du premier VC; écrire les demandes d'écriture de SDRAM du deuxième VC, le (4M+4+2)^{ème} VC,..., le (4N-4M+2)^{ème} VC dans le registre de FIFO de demande d'écriture du deuxième VC; écrire les demandes d'écriture de SDRAM du troisième VC, le (4M+4+3)^{ème} VC; ..., le (4N-4M+3)^{ème} VC dans le registre de FIFO de demande d'écriture du troisième VC; écrire les demandes d'écriture de SDRAM du(4M+4)^{ème} VC, le (2(4M+4)^{ème} VC,..., le (4N+4)^{ème} VC dans le registre de FIFO de demande d'écriture du (4M+4)^{ème} VC;
ladite étape d'écriture des demandes de lecture de SDRAM desdits VCs dans les registres FIFO de demande de lecture des VCs correspondants comprend en outre:
écrire les demandes de lecture de SDRAM du premier VC, le (4M+4+1)^{ème} VC,..., le (4N+4M+1)^{ème} VC dans le registre de FIFO de demande de lecture du premier VC; écrire les demandes de lecture de SDRAM du deuxième VC, le (4M+4+2)^{ème} VC,..., le (4N+4M+2)^{ème} VC dans le registre de FIFO de demande de lecture du deuxième VC; écrire des demandes de lecture de SDRAM du troisième VC, le (4M+4+3)^{ème} VC,..., le (4N+4M+3)^{ème} VC dans le registre de FIFO de demande de lecture du troisième VC; écrire les demandes de lecture de SDRAM du (4M+4)^{ème}VC, le (2(4M+4))^{ème} VC,..., le (4N+4)^{ème} VC dans le registre de FIFO de demande de lecture du(4M+4)^{ème} VC.

2. Procédé selon la revendication 1, dans lequel les dits VCs sont des VC4s de conteneur virtuel dans une module de transmission synchrone de niveau 4, STM-4.

3. Procédé selon la revendication 2, dans lequel le dit VC4 comprend un conteneur Standard C4 ou trois conteneurs virtuels de VC3;
lorsque le VC4 comprend trois VC3s, après l'étape de mappage de VCs aux Banques d'une SDRAM, le procédé comprend en outre:
mettre en mémoire tampon chacun des dits VC4s étant subdivisé en trois premiers tampons enfants, et chacun des dits
premiers tampons enfants stockant le dit VC3.

4. Procédé selon la revendication 3, dans lequel le dit VC3 comprend un conteneur standard De C3 ou21 conteneurs virtuels de VC12;
lorsque le dit conteneur virtuel de VC3 comprend 21 VC12s, après l'étape de tampon de chacun des dits VC4s étant subdivisé en trois premiers tampons enfants, et chacun du dit premier tampon enfant stockant un dit VC3, le procédé comprend en outre:
diviser le tampon dudit VC3 en 21 deuxièmes tampons enfants, et chacun du dit deuxième tampon enfant stockant un VC12.

5. Procédé selon la revendication 1, dans lequel la dite SDRAM est un seul débit de données, SDR, SDRAM ou un double débit de données, DDR, SDRAM.

6. Un appareil pour aligner un VC transmis par trajets multiples, un conteneur virtuel, membres sur le port d'un VCG, Groupe de Concaténation Virtuel, dans un SDH, Hiérarchie numérique synchrone, dispositif, l'équipement comprenant:
un module de mappage (61) qui est configuré pour lier
VCs aux Banques d'une mémoire dynamique synchrone à accès aléatoire,
SDRAM, dans laquelle les Banques de la SDRAM fonctionnent en parallèle et le nombre des VCsest4N+4et le nombre des Banques est 4M+4, où N et M sont des nombres entiers et N≥M; un module d'écriture (62) configuré pour écrire des demandes d'écriture de SDRAM des VCs en demande d'écriture premier entré premier sorti, FIFO, registres des VCs correspondants et écrire
demandes de lecture de SDRAM desdits VCs dans des registres de FIFO de demande de lecture des VCs;
un module d'interrogation (63) configuré pour interroger les registres de FIFO de demande d'écriture
et les registres de FIFO de demande de lecture desdits VCs et des données d'horaires des VCs à une SDRAM
contrôleur pour plus de traitement,
dans lequel, le dit module de mappage est en outre configuré pour aligner séquentiellement les VCs en tant qu'un premier VC, un deuxième
VC,..., un (4N+4)^{ème} VC et aligner séquentiellement les Banques de la SDRAM en tant qu'une première Banque, une deuxième Banque,..., une (4M+4)^{ème} Banque;
la SDRAM est configurée pour stocker
les premiers (4M+4) VCs dans la première Banque, la deuxième Banque,..., la (4M+4)^{ème} Banque de la SDRAM et pour stocker respectivement les deuxièmes (4M+4) VCs dans la première Banque, la deuxième Banque,..., la (4M+4)^{ème} Banque de la SDRAM; la (4M+4)^{ème} Banque de la SDRAM,
dans lequel, le dit module d'inscription est en outre configuré pour aligner séquentiellement les VCs en tant qu'un premier VC, un deuxième VC, ..., un (4N+4)^{ème} VC et aligner séquentiellement les Banques de la SDRAM en tant qu'une première Banque, une deuxième Banque,...,une (4M+4)^{ème} Banque;
le dit module d'écriture est en outre configuré pour écrire les demandes d'écriture de SDRAM du premier VC, le (4M+4+1)^{ème} VC,..., le (4N+4M+1)^{ème} VC dans le registre de FIFO de demande d'écriture du premier VC, écrire les demandes d'écriture de SDRAM du deuxième VC, le(4M+4+2)^{ème} VC,..., le (4N-4M+2)^{ème} VC dans le registre de FIFO de demande d'écriture du deuxième VC, écrire les demandes d'écriture de SDRAM du troisième VC, le (4M+4+3)^{ème} VC, .... (4N-4M+3)^{ème} VC dans le registre de FIFO de demande d'écriture du troisième VC et écrire
les demandes d'écriture de SDRAM du (4M+4)^{ème} VC, du (2(4M+4)^{ème} VC,..., du (4N+4)^{ème} VC dans le registre de FIFO de demande d'écriture du (4M+4)^{ème} VC;
le dit module d'écriture est en outre configuré pour écrire la demande de lecture de SDRAM du premier VC, le (4M+4+1)^{ème} VC,..., le (4N-4M+1)^{ème} VC dans le registre de FIFO de demande de lecture du premier VC, écrire les demandes de lecture de SDRAM du deuxième VC, le (4M+4+2)^{ème} VC,..., le (4N-4M+2)^{ème} VC dans le registre de FIFO de demande de lecture du deuxième VC, écrire la demande de lecture de SDRAM du troisième VC, le (4M+4+3)^{ème} VC,..., le (4N-4M + 3)^{ème} VC dans le registre de FIFO de demande de lecture du troisième VC,... et écrire
La demande de lecture de SDRAM du (4M+4)^{ème} VC, du (2(4M+4))^{ème} VC, ..., le (4N+4)^{ème} VC dans le registre de FIFO de demande de lecture du (4M+4)^{ème} VC.

7. Appareil selon la revendication 6, dans lequel les dits VCs sont des VC4s de conteneur virtuel dans un module de transmission synchrone de niveau 4, STM-4.

8. Appareil selon la revendication 7, dans lequel le dit VC4 comprend un conteneur standard de C4 et trois conteneurs virtuels de VC3s;
lorsque le VC4 comprend trois VC3s, l'appareil comprend en outre:
un premier module de division, qui est configuré pour diviser le tampon de chacun des dits VC4s en trois premiers tampons enfants, et chacun des dits premiers tampons enfants est configuré pour stocker un VC3.

9. Appareil selon la revendication 8, dans lequel le dit VC3comprend un conteneur standard De C3 ou21 conteneurs virtuels de VC12;
lorsque le VC3 comprend 21 VC12s, l'appareil comprend en outre:
un deuxième module de division, configuré pour diviser le tampon dudit VC3 en 21 deuxièmes tampons enfant, et chacun des dits deuxièmes tampons enfants est configuré pour stocker un VC12.

10. Appareil selon la revendication 6, dans lequel la dite SDRAM est un seul débit de données, SDR,SDRAM ou un double débit de données, DDR, SDRAM.
